# EUROPEAN PATENT APPLICATION

(11) **EP 3 910 759 A1**
(43) Date of publication of application: **17.11.2021**
(21) Application number: 19944560.2
(22) Date of filing: 22.10.2019
(51) Int. Cl.: H02K 3/12

(54) **DUAL-WINDING PERMANENT MAGNET MOTOR**

(30) Priority: 06.09.2019 CN 201910841504
(71) Applicant: CRRC Electric Vehicle Co., Ltd., Zhuzhou, Hunan 412007 (CN)
(72) Inventor: CHENG, Shuangyin, Zhuzhou, Hunan 412007 (CN); WANG, Wei, Zhuzhou, Hunan 412007 (CN); WANG, Kunjun, Zhuzhou, Hunan 412007 (CN); LING, Yuelun, Zhuzhou, Hunan 412007 (CN); LUO, Xiao, Zhuzhou, Hunan 412007 (CN)
(74) Representative: Peters, Sebastian Martinus
(86) International application number: PCT/CN2019/112516
(87) International publication number: WO 2021/042455

(57) **Abstract**

A permanent magnet motor and an electric vehicle using the permanent magnet motor. A stator of the permanent magnet motor has two sets of three-phase windings, the two sets of windings are distributed in a staggered manner in circumferential space of the stator of the permanent magnet motor, and the two sets of windings can be independently controlled, without decoupling, by two three-phase inverters included in a drive system of the electric vehicle.

## Description

### Technical Field

The invention relates to a permanent magnet motor, and more specifically, to a dual-winding permanent magnet motor.

### Technical Background

The cost of the drive system of electric vehicles is mainly composed of drive motors and inverters. The drive motors are core and key component of electric vehicles, having a vital impact on the safety of the vehicles, especially for vehicles in scenic spots or some vehicles with high safety requirements. The structure design of traditional drive motors does not have a failure redundancy function. In addition, medium-sized or heavy vehicles such as electric buses and electric trucks require high-power drive systems, and the inverters of high-power drive systems need to use high-power devices with small industrial usage, resulting in very high costs.

There has been a dual-winding motor design with two sets of windings in the industry. However, the existing dual-winding motor solutions are usually dual Y with phase shifted by a certain angle. The problem to be solved by this kind of solution is to cancel the specific sub-harmonics generated by the windings in the motor, thereby eliminating the torque ripple of the motor. However, there is still a major problem that when the two sets of windings work at the same time, the control has to perform magnetic circuit decoupling to eliminate the mutual interference between the two sets of windings. Therefore, independent controllers cannot be used to simultaneously control the two sets of windings.

Therefore, it is desired to have an improved permanent magnet motor suitable for electric vehicles.

### Summary of the Invention

The content of the present invention is provided to introduce in a simplified form some concepts will be further described in the following specific embodiments. This summary is not intended to identify key features or essential features of the claimed subject matter, nor is it intended to be used to help determine the scope of the claimed subject matter.

According to one aspect of the present invention, a permanent magnet motor is provided, wherein the stator of the permanent magnet motor has two sets of three-phase windings, wherein the two sets of windings being distributed in a staggered manner on the circumferential space of the stator of the permanent magnet motor, and the two sets of windings can be independently controlled by two three-phase inverters respectively without decoupling.

According to a further embodiment of the present invention, the two sets of windings are short-pitch windings.

According to a further embodiment of the present invention, the pitch of the two sets of windings is the maximum pitch satisfying short-distance windings.

According to a further embodiment of the present invention, the two sets of windings adopt a double-layer structure with an upper layer and a lower layer in each stator slot.

According to a further embodiment of the present invention, the coil connection mode of any pole phase of any one of the two sets of windings is that the lower layer coil side of a present slot is connected to the upper layer coil side of the slot spaced by the winding pitch.

According to a further embodiment of the present invention, the number of slots per pole per phase of the permanent magnet motor is 2, and every two coils form a coil group.

According to a further embodiment of the present invention, any two adjacent coil groups on each layer of the double-layer structure have opposite current directions.

According to a further embodiment of the present invention, the two sets of three-phase windings have the same number of windings and connection manner.

According to a further embodiment of the present invention, the two sets of three-phase windings are evenly distributed in a staggered manner on the circumferential space of the stator of the permanent magnet motor.

According to another aspect of the present invention, an electric vehicle is provided, wherein the drive system of the electric vehicle comprises:
the permanent magnet motor with two sets of three-phase windings provided by the present invention, and
two three-phase inverters configured to independently control the two sets of windings in the permanent magnet motor without decoupling.

Compared with the prior art, the dual-winding motor proposed by the present invention has at least the following advantages:
1. The dual-winding permanent magnet motor of the present invention has two sets of three-phase windings, and each set of windings bears only half of the current and power of a traditional motor with one set of three-phase windings, which can avoid the use of high-power devices. Although the number of power devices has doubled, the total cost can still be reduced.
2. The stator of the dual-winding permanent magnet motor proposed in the present invention has two independent sets of windings, and each set of windings can work independently, with one set of windings working independently can produce half of the output power and torque. When one set of windings fails, the other set of windings can continue to work to maintain the operation of the vehicle, thus having the function of failure redundancy.
3. The dual-winding solution proposed by the present invention has little interference between two sets of windings, the control does not have to be decoupled, and two independent three-phase inverters can be used for control.

These and other features and advantages will become apparent by reading the following detailed description and referring to the associated drawings. It should be understood that the foregoing general description and the following detailed description are only illustrative, and will not limit the claimed aspects.

### Description of the Drawings

In order to understand in detail the manner in which the above-mentioned features of the present invention are used, the content briefly summarized above may be described in more detail with reference to various embodiments, some of which are shown in the accompanying drawings. It should be noted, however, that the drawings only show some typical aspects of the present invention, and should not be considered as limiting its scope, because the description may allow other equally effective aspects.
Fig. 1 is a schematic diagram showing the structure and winding distribution of a permanent magnet motor that can be used for vehicle driving according to an embodiment of the present invention.
Fig. 2 is a schematic diagram showing the arrangement of the first set of windings of the permanent magnet motor in Fig. 1.
Fig. 3 is a schematic diagram showing the connection of the first set of windings of the permanent magnet motor in Fig. 1.
Fig. 4 is a schematic diagram showing the arrangement of the second set of windings of the permanent magnet motor in Fig. 1.
Fig. 5 is a schematic diagram showing the connection of the second set of windings of the permanent magnet motor in Fig. 1.
Fig. 6 is a schematic diagram showing the arrangement of the first set of windings of the permanent magnet motor in Fig. 1 with three phases.
Fig. 7 is a schematic diagram showing the connection of a dual-winding motor and a control inverter according to an embodiment of the present invention.

### Detailed Embodiments

The present invention will be described in detail below in conjunction with the drawings, and the features of the present invention will be further revealed in the following detailed description.

As a non-limiting example, an 8-pole 48-slot permanent magnet synchronous motor will be taken as an example to illustrate the principle of the dual-winding motor of the present invention. Those skilled in the art should understand that the present invention is not limited to the specific number of poles and slots, and permanent magnet motors with other numbers of poles and slots are also applicable to the inventive concept and structure of the present invention to be described below.

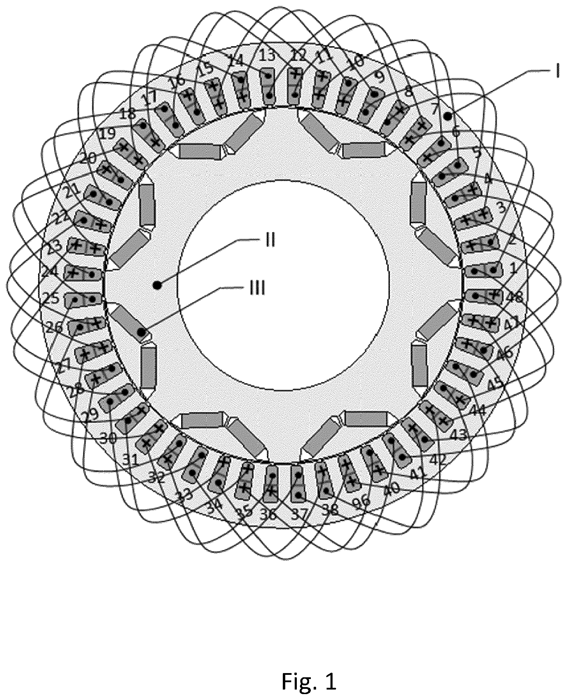

Fig. 1 is a schematic diagram showing the structure and winding distribution of a permanent magnet motor that can be used for vehicle driving according to an embodiment of the present invention. In the motor structure and winding arrangement shown in Fig. 1, reference sign I is for stator core, II is for rotor core, and III is for permanent magnet. Digits 1-48 are the serial numbers of the 48 slots of the stator. As an example, as shown in Fig. 1, the motor of the present invention adopts a double-layer distributed winding structure, and the windings in the 1-48 slots are divided into upper and lower layers. Among them, "×" and "•" indicate the positive direction of the winding current in the slot, wherein "×" indicates the inflow direction normal to the page of the figure, and "•" indicates the outflow direction normal to the page of the figure. The motor has 48 coils in total. Each pole has 2 slots per phase. Every two coils form a one-phase coil group, and 6 coils form a three-phase pole-phase group.

For the sake of clarity, the slot number corresponding to the lower side of each coil is used to represent the coil. The three phases, U, V, and W, each has 16 coils, and 8 coil groups, wherein the 8 coil groups of the U phase are 1-2, 7-8, 13-14, 19-20, 25-26, 31-32, 37-38, and 43-44; the 8 coil groups of the V phase are 5-6, 11-12, 17-18, 23-24, 29-30, 35-36, 41-42, and 47-48; the 8 coil groups of the W phase are 3-4, 9-10, 15-16, 21-22, 27-28, 33-34, 39-40, and 45-46. The above underlined numbers and not-underlined numbers indicate positive directions being opposite.

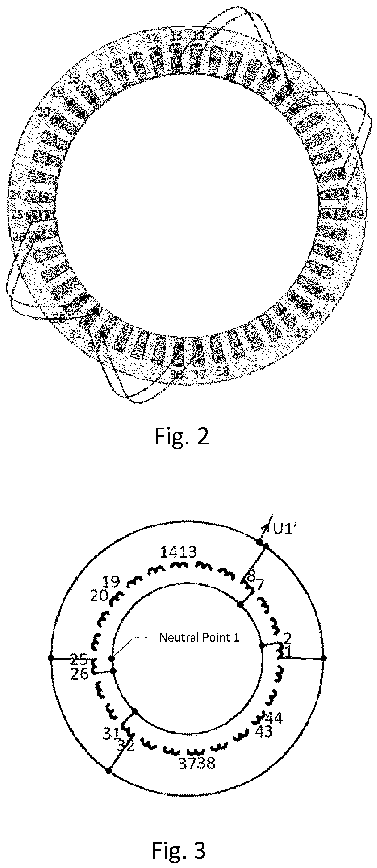

In order to provide a failure safety redundancy function and solve the cost problem of one single high-power device, the permanent magnet motor of the present invention adopts a dual-winding design. More specifically, the present invention divides the above-mentioned coil groups distributed in the stator core into two parts, that is, two sets of windings are formed. In order to express the arrangement and connection of the windings more clearly, the following Figs. 2-5 take the U phase as an example.

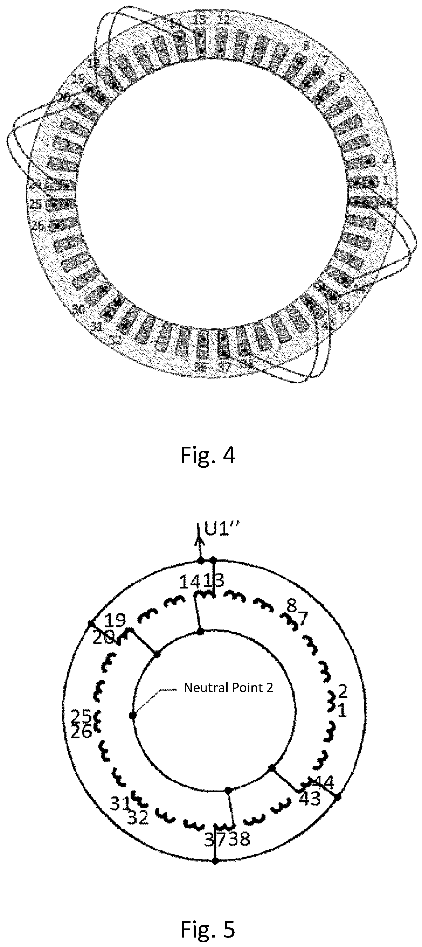

The first part of the coil group, i.e., a first set of windings, is shown in Figs. 2 and 3, wherein Fig. 2 is the arrangement diagram of the first set of windings, and Fig. 3 is the connection diagram of the first set of windings. As an embodiment of the present invention, there is a pitch between the coils. The inventor realizes that the adoption of this structure helps to reduce the interference between the two sets of windings. In the example of the present invention, the pitch of the coil is a short-pitch winding, that is, a winding with a pitch smaller than the pole pitch. As a non-limiting example, the winding pitch of the present invention is 5, and the upper layer side and the lower layer side of each coil are spaced by 5 slots and arranged according to the rule of the lower layer side. Those skilled in the art may appreciate that the pitch may not necessarily be 5, and in particular, different pitches may be set for structures with different numbers of poles or different numbers of slots. As an example, the coil connection manner of any pole phase is that the lower layer coil side of the slot (assuming the slot number is n) is connected to the upper layer coil side of the slot spaced by the winding pitch (slot number is n+5). As shown in Fig. 2, because every two coils form a coil group, and the winding is a short-pitch winding with a pitch of 5, the lower layer coil sides of slot 1 and slot 2 and the upper layer coil sides of slot 6 and slot 7 form a first coil group. Sequentially, the lower layer coil sides of slot 7 and slot 8 and the upper layer coil sides of slot 12 and slot 13 form a second coil group. In order to reduce the interference between the two sets of windings, the present invention also adopts a structure in which the two sets of windings are staggered and independently distributed on the circumferential space of the stator of the motor in the arrangement of the windings, so that the overlap of the two sets of windings on the circumferential space of the stator is reduced. Therefore, a third coil group of the first set of windings is composed of the lower layer coil sides of slots 25 and 26 and the upper layer coil sides of slots 30 and 31, and a fourth coil group is composed of the lower layer coil sides of slots 31 and 32 and the upper layer coil sides of slot 36 and slot 37. The slots left between the first and second coil groups and the third and fourth coil groups are used for a second set of windings, which will be described later in conjunction with Figs. 4 and 5.

In the connection diagram of the first set of windings shown in Fig. 3, four coil groups, coil groups 1-2, 7-8, 25-26, and 31-32, are connected in parallel, and one end of the parallel connection is connected to the input terminal U1', while the other end is connected to neutral point 1. In these 4 coil groups, coil groups 1-2 and 25-26 have the same connection manner and positive directions, while coil groups 7-8 and 31-32 have the same connection manner and positive directions.

The second part of the coil group, i.e., the second set of windings, is shown in Figs. 4 and 5, wherein Fig. 4 is the arrangement diagram of the second set of windings, and Fig. 5 is the connection diagram of the second set of windings. As shown in Fig. 4, same as the first set of windings, for the second set of windings, it is also every two coils forming a one-phase coil group, and the winding is a short-pitch winding with a pitch of 5, thus the lower layer coil sides of slot 13 and slot 14 and the upper layer coil sides of slot 18 and slot 19 form the first coil group. Sequentially, the lower layer coil sides of slot 19 and slot 20 and the upper layer coil sides of slot 24 and slot 25 form the second coil group. Corresponding to the distributed arrangement of the first set of windings, the third coil group of is composed of the lower layer coil sides of slots 37 and 38 and the upper layer coil sides of slots 42 and 43, and the fourth coil group is composed of the lower layer coil sides of slots 43 and 44 and the upper layer coil sides of slots 48 and 1. In the connection diagram of the second set of windings shown in Fig. 5, four coil groups, coil groups 13-14, 19-20, 37-38, and 43-44, are connected in parallel, and one end of the parallel connection is connected to the input terminal U1'', while the other end is connected to neutral point 2. In these 4 coil groups, coil groups 13-14 and 37-38 have the same connection manner and positive directions, while coil groups 19-20 and 43-44 have the same connection manner and positive directions.

The above Figs. 2-5 merely illustrate the case of one-phase (the U phase) windings in the three-phase winding of the 8-pole 48-slot permanent magnet synchronous motor. The windings of the other two phases V and W have the same number of windings and connection manner as the U-phase windings. As an example, the U, V, and W phase windings are symmetrically and evenly distributed in the stator core slots, wherein the phase sequence can be arbitrary. In addition, those skilled in the art may appreciate that the three phases of the windings do not necessarily need to have exactly the same number of windings and connection manner, nor do they need to be completely symmetrical and evenly distributed in the stator core slots. In some embodiments, making appropriate changes according to actual needs can still obtain the main benefits of the distributed dual windings of the present invention, that is, reducing the interference between the windings and achieving independent control of the dual windings.

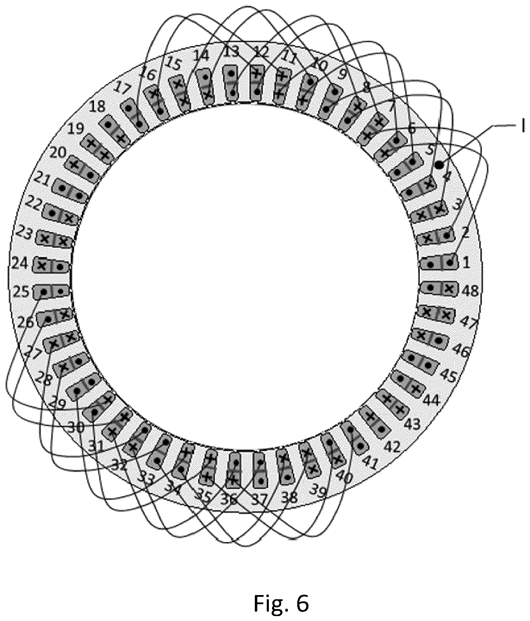

Fig. 6 illustrates the arrangement of the first set of windings with three phases U', V' and W'. As shown in Fig. 6, the slot numbers occupied by the lower layer side of the U' phase are 1, 2, 7, 8, 25, 26, 31, and 32; the slot numbers occupied by the lower layer side of the V' phase are 5, 6, 11 , 12, 29, 30, 35, and 36; and the slot numbers occupied by the lower layer side of the W' phase are 3, 4, 9, 10, 27, 28, 33, and 34. The three phases U', V' and W' of the first set of windings above occupy 24 lower layer sides of the stator core I, and the other 24 lower layer sides in Fig. 6 are occupied by the second set of windings. The upper side and the lower side of each coil are spaced by 5 slot and sequentially arranged according to the rule of the lower layer side. In addition, as shown in Fig. 6, any two adjacent coil groups of each layer of the double-layer structure have opposite current directions. For example, coil groups 1-2 and adjacent coil groups 3-4 and coil groups 47-48 have opposite current directions on the lower layer side, and coil groups 2-3 and adjacent coil groups 4-5 and coil groups 48-1 have opposite current directions on the upper layer side.

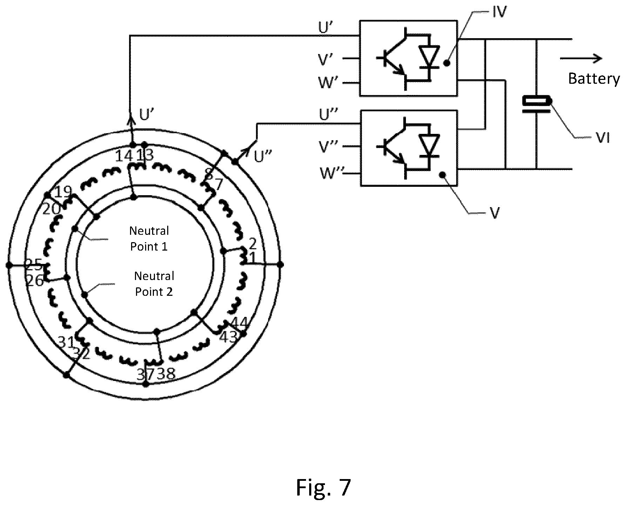

Fig. 7 illustrates the connection of the dual winding motor and the control inverter of the present invention. As described above, in the dual-winding solution proposed by the present invention, the interference between the two sets of windings is reduced, so there is no need for decoupling during control, and two independent three-phase inverters can be used for control. In Fig. 7, IV is the inverter connected to the first set of windings, and V is the inverter connected to the second set of windings. Inverter IV and inverter V are both well-known three-phase six-arm structures, and their DC ends are connected to the DC bus capacitor VI. The DC bus capacitor VI is connected to the battery, which provides driving energy to the motor through the two inverters, or receives braking energy output from the motor through the inverters. For the sake of clarity, Fig. 7 only illustrates the connection of the U-phase windings. The inverter IV for the first set of windings outputs AC three phases, U', V' and W', wherein the U'-phase output line is connected to the input terminal U' of the first set of windings; the inverter V for the second set of windings outputs AC three phase U", V" and W", wherein the U" phase output line is connected to the input terminal U" of the second winding. The inverter IV and the inverter V can simultaneously supply power to the first set of windings and the second set of windings or recycle braking energy, or they can work independently, that is, when the inverter IV is supplying power to the first set of windings or recycling the braking energy, the inverter V makes the second set of windings not input or output energy, or vice versa.

What has been described above includes examples of aspects of the claimed subject matter. Of course, it is impossible to describe every conceivable combination of components or methods for the purpose of describing the claimed subject matter, but those of ordinary skill in the art should recognize that there are many further combinations and combinations of the claimed subject matter. Permutations are all possible. Thus, the disclosed subject matter is intended to cover all such changes, modifications and changes that fall within the spirit and scope of the appended claims.

## Claims

1. A permanent magnet motor, **characterized in that**:
the stator of the permanent magnet motor has two sets of three-phase windings, wherein the two sets of windings being distributed in a staggered manner on the circumferential space of the stator of the permanent magnet motor, and the two sets of windings can be independently controlled by two three-phase inverters respectively without decoupling.

2. The permanent magnet motor of claim 1, **characterized in that**, the two sets of windings are short-pitch windings.

3. The permanent magnet motor of claim 2, **characterized in that**, the pitch of the two sets of windings is the maximum pitch satisfying short-distance windings.

4. The permanent magnet motor of claim 1, **characterized in that**, the two sets of windings adopt a double-layer structure with an upper layer and a lower layer in each stator slot.

5. The permanent magnet motor according to claim 4, wherein the coil connection mode of any pole phase of any one of the two sets of windings is that the lower layer coil side of a present slot is connected to the upper layer coil side of the slot spaced by the winding pitch.

6. The permanent magnet motor of claim 4, **characterized in that**, the number of slots per pole per phase of the permanent magnet motor is 2, and every two coils form a coil group.

7. The permanent magnet motor of claim 6, **characterized in that**, any two adjacent coil groups on each layer of the double-layer structure have opposite current directions.

8. The permanent magnet motor of claim 1, **characterized in that**, the two sets of three-phase windings have the same number of windings and connection manner.

9. The permanent magnet motor of claim 1, **characterized in that**, the two sets of three-phase windings are evenly distributed in a staggered manner on the circumferential space of the stator of the permanent magnet motor.

10. An electric vehicle, **characterized in that**, the drive system of the electric vehicle includes:
the permanent magnet motor with two sets of three-phase windings according to any one of claims 1-9, and
two three-phase inverters configured to independently control the two sets of windings in the permanent magnet motor without decoupling.
